(19) Europäisches Patentamt / European Patent Office / Office européen des brevets

(11) EP 2 847 816 B1

(12) EUROPEAN PATENT SPECIFICATION

(45) Date of publication and mention of the grant of the patent:
06.09.2017 Bulletin 2017/36

(21) Application number: 13714057.0

(22) Date of filing: 06.03.2013

(51) Int Cl.:
H01M 8/0612 (2016.01)   H01M 8/0432 (2016.01)
H01M 8/04537 (2016.01)   H01M 8/04746 (2016.01)
C01B 3/38 (2006.01)   C01B 3/48 (2006.01)

(86) International application number:
PCT/US2013/029410

(87) International publication number:
WO 2013/169329 (14.11.2013 Gazette 2013/46)

(54) **METHOD OF OPERATING A FUEL CELL POWER SYSTEM**

VERFAHREN ZUM BETRIEB EINES BRENNSTOFFZELLENSTROMSYSTEMS

PROCÉDÉ DE FONCTIONNEMENT D'UN SYSTÈME ÉLECTRIQUE À PILE À COMBUSTIBLE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 11.05.2012 US 201261645963 P

(43) Date of publication of application:
18.03.2015 Bulletin 2015/12

(73) Proprietor: Ballard Power Systems Inc.
Burnaby, BC V5J 5J8 (CA)

(72) Inventors:
• LYUBOVSKY, Maxim
  Fairfax, Virginia 22032 (US)
• BHARGAV, Atul
  Gujurat
  Ahmedabad 382424 (IN)
• HABIBZADEH, Bahman
  North Bethesda, Maryland 20852 (US)

(74) Representative: Beyer, Andreas
Wuesthoff & Wuesthoff
Patentanwälte PartG mbB
Schweigerstrasse 2
81541 München (DE)

(56) References cited:
JP-A- H0 676 846       JP-A- 2001 114 502
JP-A- 2008 293 882     JP-A- 2011 103 210
US-A- 5 989 739        US-A1- 2002 031 450
US-A1- 2002 160 243    US-A1- 2004 255 514
US-A1- 2010 062 291    US-A1- 2011 027 676

**Description**

BACKGROUND

Field of the Invention

The present invention relates to a method of operating fuel cell power systems, particularly fuel cell power systems incorporating fuel processing systems and fuel cell stacks.

Description of the Related Art

The search for alternative power sources has focused attention on the use of fuel cells to generate electrical power. Unlike conventional fossil fuel power sources, fuel cells are capable of generating electrical power from a fuel stream and an oxidant stream without producing substantial amounts of undesirable by-products, such as sulphur oxides, nitrogen oxides and carbon monoxide.

Presently, small stationary proton exchange membrane fuel cell systems are designed for applications in remote back-up power, supplemental power and combined heat and power, especially in remote off-electric-grid locations. Due to the high cost and reliability issues associated with on-site delivery of hydrogen to system locations, a practical application of fuel cell power systems requires incorporating a fuel processing system that can convert regular infrastructure fuels into hydrogen of sufficient purity for fuel cell consumption.

However, most commercial fuels, such as natural gas (NG), liquefied petroleum gas (LPG), gasoline, diesel or mixed alcohols, are in fact mixtures of various chemical components whose relative concentrations may vary considerably over time and with geographical location and markets. For example, LPG systems are expected to operate on a propane-butane fuel mixture that can vary from almost pure propane to pure butane in different markets, have varying amounts of hydrocarbon and aromatic components, as well as encounter variations during system operation due to lighter components boiling off at the top of each tank. Similarly, natural gas can contain up to 10% ethane, along with the possibility of dilution with nitrogen and carbon dioxide.

Such uncertainty in fuel composition poses serious challenges to designing a control strategy for the fuel processing system and the fuel cell power system where many system parameters, including the steam-to-carbon ratio of the steam reformer, fuel-to-air ratio of the burner, anode stoichiometry of the fuel cell stack and others, have to be controlled in a fairly narrow range of values to ensure successful system operation, as summarized in Table 1 (one skilled in the art will appreciate that these ranges may vary depending on fuel cell stack components and design, fuel processing system components and design, and fuel cell power system application). For example, uncertainty in the fuel composition makes it difficult to determine the hydrocarbon fuel flow rate needed to match the electrical load, resulting in large variations in these system parameters, which in turn can lead to system failures or even physical damage.

**Table 1: Typical operating parameter ranges for the fuel processing system and fuel cell stack, and effects of deviation**

| Parameter | Range | Effect of Deviation | |
|---|---|---|---|
| | | *Too low* | *Too high* |
| Steam:Carbon (S:C) ratio at fuel reformer inlet | 3.2 - 3.8 | Risk of catalyst coking | Low system efficiency |
| $O_2$/CO ratio (at preferential oxidation device inlet) | 1.0 - 2.0 | Risk of CO breakthrough to fuel cell stack | Loss of useful $H_2$ to oxidation, low system efficiency |
| Burner stoichiometry ($\lambda_{BR}$) | 1.2 - 1.5 | Higher burner exhaust temperature damages catalysts, high emissions | Risk of burner flame instability |
| Fuel cell anode stoichiometry (hydrogen) | 1.3 - 1.5 | Fuel starvation, low calorific value of burner fuel causes lower temperature in fuel reformer | Fuel wastage (low system efficiency); higher burner exhaust temperature damages catalysts |
| Fuel cell cathode stoichiometry (air) | 1.8 - 2.2 | Non-uniform oxidation in cathode (low system efficiency), water blockage in cathode channels | High parasitic load on compressor leading to low system efficiency |

As a result, the design and control of the fuel processing system and the fuel cell power system are desirably robust enough to handle fuel composition variations to avoid premature failure. One approach to designing the control system for the fuel processing system and the fuel cell power system is to measure the hydrocarbon fuel composition and determine correction factors to the control equations for the other system flow rates (such as air and process water) to offset possible variations. However, for small (1 - 10 kW) power systems operating in a variety of fuel markets, the need to continuously monitor fuel composition and adjust the control parameters may pose a severe limitation on the market acceptability, and increase the risk of failure due to larger than expected deviation in the fuel composition. Although there have been numerous mathematical modelling studies of fuel cell controls and fuel cell system dynamics performance, finding optimal algorithms for stable control of a fuel cell power system integrating a fuel processing system and a fuel cell stack remains an important topic for investigation.

JP 2008-293882 A discloses a fuel cell power system comprising a fuel cell, receiving as fuel the gas reformed by a fuel processing system. The fuel processing system comprises a reformer including a temperature sensor and a shift reactor. The present description addresses these issues and provides further related advantages.

BRIEF SUMMARY

Briefly, the present invention relates to methods of operating fuel cell power systems, as defined in the claims. According to the invention, a method of operating a fuel cell power system is provided, the fuel cell power system comprising at least one fuel cell stack connected to a fuel processing system, the fuel processing system comprising a vaporizer for vaporizing water or a mixture of hydrocarbon fuel and water, a fuel reformer for converting a hydrocarbon fuel into a hydrogen-rich reformate and a burner in thermal communication with the fuel reformer, the method comprising: supplying a mixture of hydrocarbon fuel and water to the vaporizer of the fuel processing system or supplying water to the vaporizer and mixing steam coming out of the vaporizer with gaseous fuels, supplying the mixture of hydrocarbon fuel and steam to the fuel reformer of the fuel processing system; supplying air to the burner of the fuel processing system; supplying the hydrogen-rich reformate from the fuel processing system to the at least one fuel cell stack; supplying an anode waste gas from the at least one fuel cell stack to the burner; drawing a load from the at least one fuel cell stack; and detecting an operating temperature of the fuel reformer; wherein supplying air and water to the fuel processing system comprises adjusting an amount of air and water to be supplied based on the load drawn from the at least one fuel cell stack; and supplying the hydrocarbon fuel to the fuel processing system comprises adjusting the amount of hydrocarbon fuel to be supplied based solely on the detected operating temperature of the fuel reformer. In further embodiments, supplying air and water to the fuel processing further comprises adjusting the amount of air and water to be supplied based solely on the load drawn from the at least one fuel cell stack.

These and other aspects will be evident upon reference to the attached drawings and following detailed description.

BRIEF DESCRIPTION OF THE FIGURES

In the figures, identical reference numbers identify similar elements or acts. The sizes and relative positions of elements in the figures are not necessarily drawn to scale. For example, the shapes of various elements and angles are not drawn to scale, and some of these elements are arbitrarily enlarged and positioned to improve figure legibility. Further, the particular shapes of the elements, as drawn, are not intended to convey any information regarding the actual shape of the particular elements, and have been solely selected for ease of recognition in the figures.

Figure 1 shows a schematic of a fuel cell power system according to one embodiment.
Figures 2A-2K show the modeling results of a prior art method of controlling fuel cell power system reactant flow rates.
Figures 3A-3J show the modeling results of a method of controlling fuel cell power system reactant flow rates according to one embodiment.

DETAILED DESCRIPTION

Unless the context requires otherwise, throughout the specification and claims which follow, the word "comprise" and variations thereof, such as "comprises" and "comprising" are to be construed in an open, inclusive sense, that is, as "including but not limited to".

In the present context, the burner equivalence ratio is defined as the actual air-to-fuel ratio divided by the air-to-fuel ratio at the combustion stoichiometry.

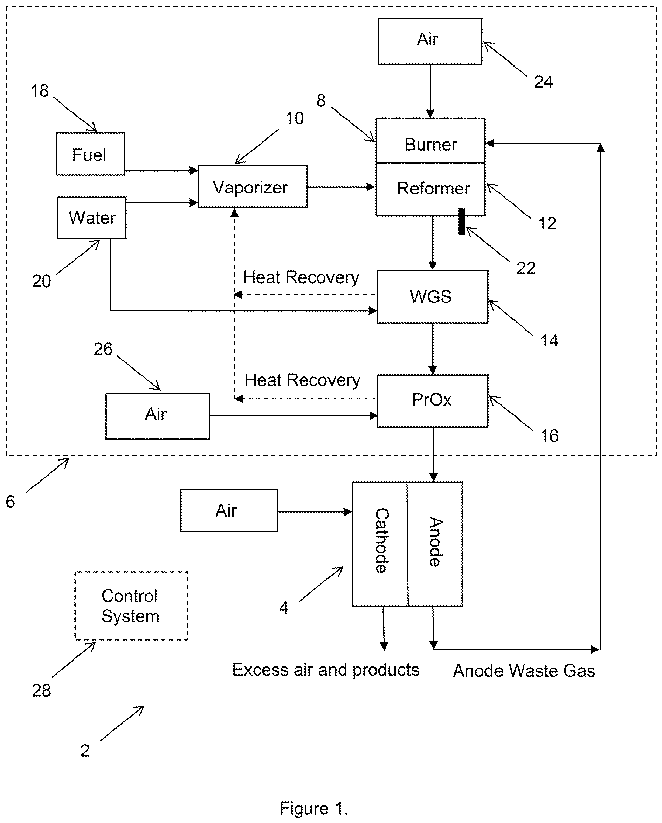

According to one embodiment, with reference to Figure 1, a fuel cell power system 2 comprises at least one fuel cell stack 4 and a fuel processing system 6. For simplicity, compressors, pumps, fans, valves, sensors, control electronics, and other balance of plant components that are not important to the present description are not shown in Figure 1. One skilled in the art will appreciate that such components are commonly used in fuel cell systems and fuel processing systems, and in some cases may be combined or integrated, depending on the fuel cell system design.

Fuel cell stack 4 comprises a plurality of unit cells, each unit cell comprising flow field plates sandwiching a membrane electrode assembly (not shown). One skilled in the art will appreciate the many different types and configuration of fuel cell stacks that will be suitable for use in the fuel cell power system of the present invention. In Figure 1, fuel cell stack 4 is represented by a single anode and cathode.

Fuel processing system 6 comprises a burner 8, a vaporizer 10, a fuel reformer 12, a water-gas shift (WGS) reactor 14, and carbon monoxide (CO) clean up device 16.

In operation, a hydrocarbon fuel from a hydrocarbon feedstock 18 is mixed with process water and passed together into the vaporizer 10. The hydrocarbon fuel may be, for example, natural gas (NG), liquefied petroleum gas (LPG), gasoline, diesel or mixed alcohols. In some embodiments, the hydrocarbon fuel is a mixture of substantially propane and butane. Vaporizer 10 may optionally include means for enhancing heat transfer and mixing, such as spiral fins, pin-fins, grooves and other flow channels. Alternatively, in the case of gaseous fuels, fuel is mixed with steam coming out of the vaporizer 10 to produce a uniformly mixed gaseous mixture, which is further fed to fuel reformer 12 (not shown).

The mixture of vaporized hydrocarbon fuel and steam is fed from vaporizer 10 to fuel reformer 12, where the vaporized hydrocarbon fuel is reformed to form a reformate comprising mainly of hydrogen, carbon dioxide and carbon monoxide. For example, for propane fuel, the reaction in the fuel reformer 12 can be represented via the following:

$$C_3H_8 + (6\text{-}x)H_2O \rightarrow (3\text{-}x)CO_2 + xCO + (10\text{-}x)H_2 \qquad (1)$$

For a hydrocarbon-based fuel, the setpoint operating temperature at the outlet of fuel reformer 12 is typically controlled to be between about 650 to 750 degrees Celsius, for example, between about 670 and 700 degrees Celsius, though one skilled in the art will appreciate that the desired setpoint operating temperature of the fuel reformer may vary depending on the components of the fuel or fuel mixture. Thermocouple 22 detects an operating temperature of fuel reformer 12.

Because the reforming reaction in fuel reformer 12 is endothermic, a burner 8 is typically employed to provide heat to fuel reformer 12 to keep the fuel reformer temperature at the desired temperature or temperature range. Burner 8 is fed with anode waste gas (gas leaving the anode side of the fuel cell stack 4 which contains unused hydrogen and unreformed hydrocarbon fuel) and air from air source 24, which is then combusted to produce heat.

The reformate exiting fuel reformer 12 typically contains a relatively large amount of carbon monoxide, which is undesirable because it poisons the catalysts used in the fuel cell stack. Therefore, fuel processing system 6 includes a WGS reactor 14 that is fluidly connected to fuel reformer 12 for converting at least a portion of the carbon monoxide in the reformate stream from fuel reformer 12 to carbon dioxide and hydrogen via a water-gas shift reaction, which may be represented by the following:

$$CO + H_2O \rightarrow CO_2 + H_2 \qquad (2)$$

The temperature of WGS reactor 14 is preferably between about 200 to 400 degrees Celsius, for example, between 250 and 300 degrees Celsius. At these temperatures, the carbon monoxide concentration in the reformate stream exiting WGS reactor 14 is typically reduced to about 0.5 to about 1.0 volume %. Excess heat may optionally be directed to vaporizer 10.

A CO clean up device 16 that is fluidly connected to WGS reactor 14 is typically used to further reduce the carbon monoxide concentration in the reformate stream from WGS reactor 14 to levels acceptable by fuel cell stack 4. A number of techniques known in the art may be used for the CO clean up device, such as membrane separation, pressure swing adsorption, selective conversion of carbon monoxide to methane, and preferential oxidation of carbon monoxide with oxygen from air.

In one embodiment, CO clean up device 16 is a preferential oxidation (PrOx) device. A PrOx device typically includes a catalyst for reacting carbon monoxide from the reformate stream with oxygen from air source 26 to form carbon dioxide. The operating temperature of the PrOx device is typically controlled to be between about 100 to 200 degrees Celsius, for example, between about 100 to 150 degrees Celsius. The carbon monoxide concentration of the reformate stream from the PrOx device is typically equal to or less than about 50 ppm, for example, equal to or less than about 10 ppm, which is suitable for fuel cell consumption. Again, excess heat generated by the PrOx device may optionally be directed to vaporizer 10.

For proper fuel cell power system operation, all chemical reactions in the fuel processing system and fuel cell stack need to operate within a narrow set of reaction-specific temperatures and reactant concentration ranges, as shown in Table 1. Therefore, a combination of fuel processor hardware design and control strategy for delivering fuel, process water and air are necessary for ensuring stable, optimum performance of the fuel cell power system.

In one embodiment, control system 28 uses the fuel cell current to control or adjust the reactant flow rates, such as air to burner 8, process water to fuel reformer 12, and air to CO clean up device 16, with the exception of the hydrocarbon fuel flow rate to fuel reformer 12. Instead, the hydrocarbon fuel flow rate is controlled or adjusted such that the desired setpoint operating temperature or temperature range in fuel reformer 12 is maintained during operation, without prior knowledge of the fuel composition.

The control strategy is based on an intrinsic correlation between the amount of hydrocarbon fuel fed to fuel reformer 12, the fuel cell stack current, the heating value of the anode waste gas from fuel cell stack 4 that is returned to burner 8, and the internal heat balance within fuel processing system 6. For a fuel represented by a general formula $C_xH_yO_z$, where x, y and z are the average numbers of C, H and O atoms in each molecule, respectively, the fuel composition of the gases entering fuel cell stack 4 can be calculated through a general reforming equation (3):

$$p\ C_xH_yO_z + q\ H_2O + s\ Air \rightarrow \eta * p * x\ CO_2 + \psi\ CH_4 + \mu\ H_2 + \tau\ H_2O + \rho\ N_2 \qquad (3)$$

Here, p, q, s, $\psi$, $\mu$, $\tau$, and $\rho$ are flow rates in standard liters per minute (slpm) and the fuel conversion efficiency $\eta$ is a user-defined parameter (usually varies between 0.95-1.0). $\psi$, $\mu$, $\tau$, and $\rho$ can be calculated as:

$$\psi = (1 - \eta) * p * x$$

$$\rho = s * 0.79$$

$$\tau = p * z + q + 2 * s * 0.21 - 2 * \eta * p * x$$

$$\mu = 0.5 * p * y + q - 2 * \psi - \tau$$

This provides the amount of hydrogen present in the reformate ($\mu$) supplied to fuel cell stack 4 from CO clean up device 16. The amount of hydrogen consumed by the fuel cell stack can be calculated from equation (4) (see Examples) as:

$$FC_{H2,cons} = MCC * 60 * 22.4 / (2 * F)$$

where MCC is the multiple-cell current (fuel cell current multiplied by the number of cells in the stack) and F is Faraday's constant. Assuming that the heating values for different fuels are approximately proportional to its carbon and hydrogen content, which is the case for different mixtures of alkanes, which is the main component of LPG fuels, the heat content of anode waste gas can then be calculated as:

$$LHV_{AWG} = LHV_{H2} * (\mu - FC_{H2,cons}) + LHV_{CH4} * \psi \qquad (4)$$

The heat content of the anode waste gas, therefore, is tied to the heating value of its hydrogen and unreformed hydrocarbon fuel content, as well as the fuel cell stack current.

In one embodiment, the process water and air flow rates (e.g., burner air, fuel reformer air and process water, cathode air, etc.) are controlled or adjusted proportionally to the MCC (via equations (11) to (14) in the Examples). As the MCC changes in the response to the varying load drawn from the fuel cell stack, the process water and air flow rates will change, causing a change in the operating temperature of the fuel reformer. As control system 28 senses this operating temperature change, the flow rate of the hydrocarbon fuel is adjusted to maintain the fuel reformer at the desired setpoint operating temperature. Thus, no metering or prior knowledge of the exact composition of the hydrocarbon fuel is needed. In some embodiments, the process water and air flow rates are controlled or adjusted based solely on the MCC. The hydrocarbon fuel is controlled or adjusted based solely on the operating temperature of the fuel reformer.

In some instances, the fuel reformer temperature may respond more slowly to changes in the reformer feed flow parameters due to the thermal mass of the fuel reformer. For example, when the MCC changes, the amount of air supplied to the burner will immediately change because the air flow rate is controlled by the MCC. At the same time, the heating value of the AWG will quickly be reduced because a larger fraction of hydrogen is consumed, according to the equation (4), and, thus, the amount of AWG recycled to the burner is decreased. However, because the fuel reformer temperature does not immediately change with changes in these flows due to thermal mass of the reformer, the hydrocarbon fuel flow rate will not be adjusted immediately. This may lead to either burner fuel starvation when the MCC is increased or excess fuel and emissions produced by the burner when the MCC is decreased.

Therefore, in another embodiment, which is not part of the present invention, the hydrocarbon fuel flow rate is controlled or adjusted based on the burner equivalence ratio, $\lambda_{BR}$. The burner equivalence ratio may be independently measured, for example, by determining the oxygen concentration by installing an oxygen sensor in the burner exhaust line, and then compared to a burner equivalence ratio setpoint, $\lambda_{SP}$. When the MCC changes, thereby causing a corresponding change in the burner air supply, the hydrocarbon fuel flow is immediately adjusted to maintain the burner equivalence ratio at its setpoint value so that an adequate amount of reformate is being supplied to the fuel cell stack at the new MCC. Over time, the reformer operating temperature may change or diverge from the desired operating temperature setpoint in response to the new system operating parameters. If such a temperature change in the fuel reformer is detected, the burner equivalence ratio is continuously adjusted by varying the hydrocarbon fuel flow rate until the detected operating temperature reaches the desired operating temperature setpoint, thereby establishing a new burner equivalence ratio setpoint. Using this control method, any lag in temperature change in the fuel reformer due to its thermal mass is mitigated and the prior knowledge of the composition of the hydrocarbon fuel is not necessary for improved control of the fuel processing system.

In instances where the fuel composition changes during operation, the fuel flow rate for a given MCC and fuel reformer temperature will change over time. Furthermore, the burner equivalence ratio setpoint will likely be different for different fuel processing systems and fuel compositions.

Alternatively, to eliminate the oxygen sensor, a proportion coefficient, $K_{PF}$, may be used as that parameter that is adjusted to maintain the operating temperature of the fuel reformer at its setpoint value. According to Equation (10), the hydrocarbon fuel flow rate is set proportionally to the MCC via $K_{PF}$. Therefore, when the MCC changes, the hydrocarbon fuel flow rate also changes (as well as all other flows, according to Equations (11) through (14) in the Examples). If this creates a divergence in the operating temperature of the reformer from the desired operating temperature setpoint, $K_{PF}$ is adjusted, resulting in a change to the hydrocarbon fuel flow rate and, consequently, the operating temperature of the fuel reformer. Eventually, with continuous feedback from the detected operating temperature of the fuel reformer and change in $K_{PF}$ and, thus, the fuel flow rate, the operating temperature of the fuel reformer will reach its desired operating temperature setpoint. One skilled in the art will appreciate that this method will require the actual measurement of the hydrocarbon fuel flow rate (or measurement of fuel feed actuator position) but will not require an oxygen sensor in the burner exhaust line as the hydrocarbon fuel flow rate will be changing immediately with changing MCC and the burner equivalence ratio will remain within the narrow range. To compensate for variable hydrocarbon fuel compositions, the $K_{PF}$ value is adjusted to keep the operating temperature of the fuel reformer at its setpoint value.

The control strategy may be carried out by any commonly known control system or device, such as a computer or process logic chip, using, for example, a proportional-integral-derivative (PID) controller. In this instance, a PID control loop is set to control the reformer temperature to a specified setpoint value and uses the hydrocarbon fuel feed to the reformer (or burner equivalence ratio setpoint value or the proportion coefficient) as an adjusted parameter.

EXAMPLES

The fuel cell power system as described in the foregoing was modeled in two ways: the first via a Fuel-based control strategy, which is based on assuming the hydrocarbon fuel composition and measuring the fuel flow rate proportionally to the FC system load (MCC) and setting flow rates of the process water, burner air, fuel cell cathode air, and preferential oxidation device air to be proportional to the hydrocarbon fuel feed flow; and the second via a Current-and-Temperature-based control strategy, which is based directly on the multiple-cell current (MCC) (total fuel cell stack current) and the temperature of the fuel reformer.

The fuel cell power system was modeled to include a fuel reformer, followed by the WGS reactor and a preferential oxidation device, which cumulatively converted the hydrocarbon fuel into a reformate having less than about 10 ppm carbon monoxide. The reformate is supplied to the anode side of the fuel cell stack, while compressed air is supplied to the cathode side of the fuel cell stack. Exhaust from the anode - anode waste gas (AWG) - that contains unused hydrogen and unreformed hydrocarbon fuel is supplied as fuel to the burner with no additional (trim) fuel. The hot burner exhaust gases provided heat for the fuel reformer, and the remaining heat was used in the vaporizer. Exothermic heat produced by the WGS and preferential oxidation device was also used to generate steam.

The following assumptions and approximations were made in the fuel cell power system model:

- The fuel reformer was modelled as a Gibbs reactor equilibrated at a specified exit temperature (675°C). Heat required by the fuel reformer was removed from the burner exhaust stream. Hydrocarbon fuel input to the fuel reformer was adjusted to equate the two heat streams.

- The WGS reactor was also modeled as a Gibbs reactor with fixed inlet and outlet temperatures (300°C and 200°C, respectively), and the process heat was transferred to the vaporizer. The methane present at the exit of the fuel reformer was assumed to be inert in the WGS reactor to avoid the methanation reaction.

- The preferential oxidation device was modeled as a conversion reactor in which oxygen was first used to oxidize carbon monoxide, and then the remaining oxygen was used for oxidizing hydrogen. Complete removal of carbon monoxide in the reformate stream was assumed by the model, since the estimated up to 50 ppm of carbon monoxide that may be present is not expected to substantially affect the heat balance of the preferential oxidation device. The inlet and outlet temperatures were fixed at 200°C and 100°C, respectively, and the process heat was transferred to the vaporizer, similar to the WGS reactor.

- Fuel cell stack was modeled as a series of reactors. First, a component splitter operation separated the amount of hydrogen needed for the MCC from the reformate stream supplied to the anode. Thereafter, a correlation between the MCC and hydrogen consumed by the fuel cell stack was determined as:

$$MCC \text{ [Ampere-cells]} = 2 * H_2 \text{ [mole/s]} * F \qquad (5)$$

This hydrogen separation essentially corresponds to the proton exchange membrane process. The cathode was modelled as an isothermal reactor (operating at a predetermined fuel cell stack temperature), in which any hydrogen crossing over the membrane from the anode to the cathode was oxidized by oxygen from the cathode air stream. Based on the current density, which was determined as the MCC divided by the total fuel cell stack active area, the cell voltage was determined off of a manufacturer supplied polarization curve. Electric power generated by the fuel cell stack was then calculated as the product of the MCC and the cell voltage and was subtracted from the total cathode heat release. Part of the remaining heat was used to preheat the anode and cathode inlet streams to the desired operating temperature and the balance of the heat was used to heat the fuel cell stack coolant stream. The power required to operate the balance of plant (BOP) components - air and water pumps, control electronics, cooling fans, etc - was subtracted from the electrical power generated by the fuel cell stack, and the remaining power was considered to be the useful load to the customer. System efficiency was then calculated as a ratio of useful electric power to lower heating value (LHV) of the fuel feed to the system.

This steady state model was run with the fuel cell stack current demand as the primary control parameter, thereby simulating the fuel cell power system in which current was adjusted to match the electric load demand. In this study, the MCC was varied between 840 and 4400 Ampere-cells (500 W and 2500 W). The resultant current density varied between 0.24 and 1.3 A/cm$^2$ (assuming a fuel cell stack active area of 3500 cm$^2$), which corresponded to a per fuel cell voltage of between about $0.77 \geq Vcell \geq 0.65$ V.

Using the assumptions described above, two methods of controlling the flow rates of various feeds to the fuel cell power system were investigated: the Fuel-based control strategy and the Current-and-Temperature-based control strategy.

Comparative Example: Fuel-Based Control Strategy

The Fuel-based control strategy is based on measuring the hydrocarbon fuel feed flow rate and setting flow rates of the process water, burner air, fuel cell cathode air, and preferential oxidation device air to be proportional to the hydrocarbon fuel flow rate, which are represented by equations (6) to (9). The process water flow rate (PW) to the vaporizer and fuel reformer was determined based on the average number of carbon atoms in the fuel molecule and the design steam-to-carbon ratio set at 3.5. Burner air flow rate (BA) was determined by the design burner stoichiometry ($\lambda_{BR}$) and the amount of hydrogen contained in the anode waste gas from the fuel cell stack that was supplied to the burner as fuel. The cathode air flow rate (CA) was determined by the design cathode stoichiometry and the amount of hydrogen consumed by the fuel cell stack. The preferential oxidation device air flow rate (PA) was determined based on the assumed carbon monoxide concentration in the reformate from the WGS reactor (typically about 0.75% on dry basis) and the preferential oxidation reaction selectivity towards carbon monoxide oxidation, which was assumed to be about 50%. The hydrocarbon fuel flow rate (PF) was set proportionally to the MCC (equation (10)), where the proportion coefficient, $K_{PF}$, is the system operation parameter that was adjusted to regulate the fuel reformer temperature to a specified value.

$$PW \text{ [g/min]} = K_{PW} * PF \text{ [slpm]} ; \quad K_{PW} = C\_av * StoC * 18 / 22.4 \qquad (6)$$

$$BA\ [slpm] = K_{BA} * PF\ [slpm];\ K_{BA} = \lambda_{BR} * K_{H2} * (\lambda_{AN}-1) / \lambda_{AN} / 2 / 0.21 \qquad (7)$$

$$CA\ [slpm] = K_{CA} * PF\ [slpm];\ K_{CA} = K_{H2} * \lambda_{CA} / \lambda_{AN} / 2 / 0.21 \qquad (8)$$

$$PA\ [slpm] = K_{PA} * PF\ [slpm];\ K_{PA} = K_{mole} * CO\% * S\% / 2 / 0.21 \qquad (9)$$

$$PF\ [slpm] = K_{PF} * MCC\ [A] \qquad (10)$$

Where:

C_av - average number of carbon atoms per hydrocarbon molecule in the fuel;
StoC - the design steam:carbon ratio in the fuel reformer;
$K_{H2}$ - moles of $H_2$ generated per mole of fuel in the reforming process;
$\lambda_{AN}$ - the design fuel cell stack anode stoichiometry;
$\lambda_{CA}$ - the design FC cathode stoichiometry;
$\lambda_{BR}$ - the design burner stoichiometry;
$K_{mole}$ - number of moles of carbon dioxide and hydrogen (dry) per mole of fuel;
CO% - assumed CO% (dry) at the entrance to the preferential oxidation device; and
S% - selectivity of preferential oxidation reaction.

This control strategy requires metering of the fuel feed flow rate and knowledge of fuel composition in order to properly set other flow parameters. In this study, the control coefficients were set assuming LPG fuel as an equimolar mixture of propane and butane ($C_{3.5}H_9$). For this mixture, the parameters in equations (6) to (9) become:

C_av = 3.5
$K_{H2}$ = 11.5 ($C_{3.5}H_9$ + 7 $H_2O \rightarrow$ 3.5 $CO_2$ + 11.5 $H_2$)
$K_{mole}$ = 15 ($C_{3.5}H_9$ + 7 $H_2O \rightarrow$ 3.5 $CO_2$ + 11.5 $H_2$)
$\lambda_{AN}$ = 1.35
$\lambda_{CA}$ = 2.0
$\lambda_{BR}$ = 1.7

The $K_{PF}$ parameter in equation (10) was adjusted to maintain the specified fuel reformer exit temperature. In the model, this was simulated by varying the $K_{PF}$ parameter to achieve the desired heat balance between the heat provided by the burner and the heat demand of the fuel reformer at the specified exit temperature of 675 °C.

Inventive Example: Current-and-Temperature-Based Control Strategy

The Current-and-Temperature-based control strategy was based on determining all system flow rates directly on the MCC value (equations (11) to (14)), with the exception of the hydrocarbon fuel flow rate, as described in the foregoing discussion. The coefficients between the various flow rates and the MCC were set to match the corresponding flow rates as in the Fuel-based control strategy for an equimolar mixture of propane and butane.

$$PW\ [g/min] = 1 + 0.00883 * MCC\ [A] \qquad (11)$$

$$BA\ [slpm] = 0.013 * MCC\ [A] \qquad (12)$$

$$CA\ [slpm] = 0.03 * MCC\ [A] \qquad (13)$$

$$PA\ [slpm] = 0.0006 * MCC\ [A] \qquad (14)$$

Because the flow rates were determined based on the MCC alone, no metering of the hydrocarbon fuel feed flow rate was necessary and no equation for such was specified. Instead, the hydrocarbon fuel feed flow rate is used as a parameter to control the fuel reformer temperature. Similar to the $K_{PF}$ parameter in the previous algorithm, the value of the hydrocarbon fuel feed flow rate was adjusted up or down to ensure heat balance between the heat provided by the burner and the heat demand of the fuel reformer at a fuel reformer exit temperature set at a constant 675 °C.

Modelling Results

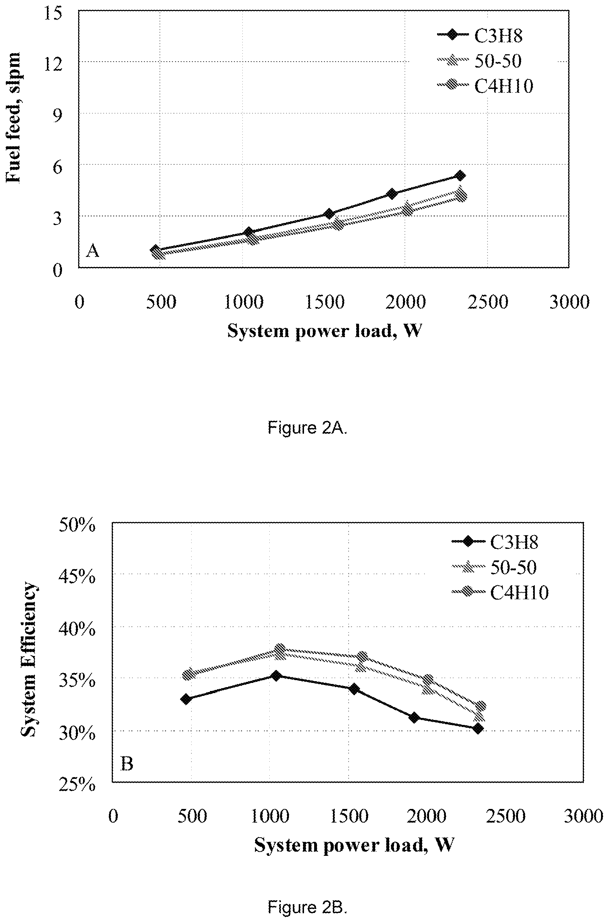

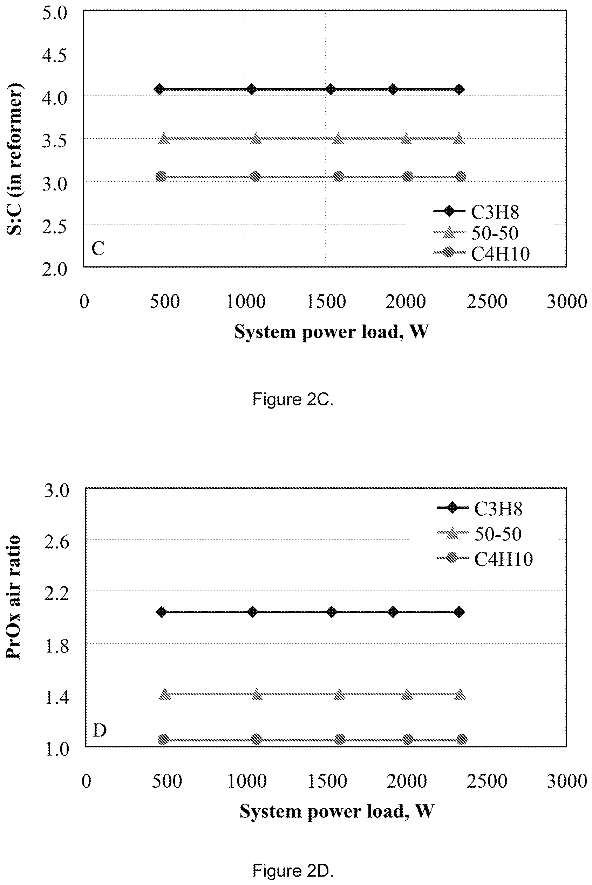

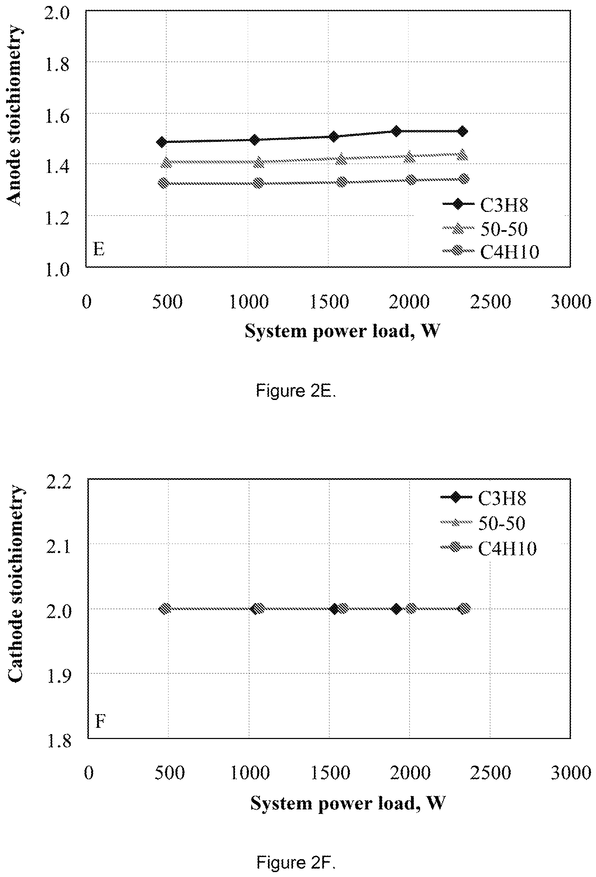

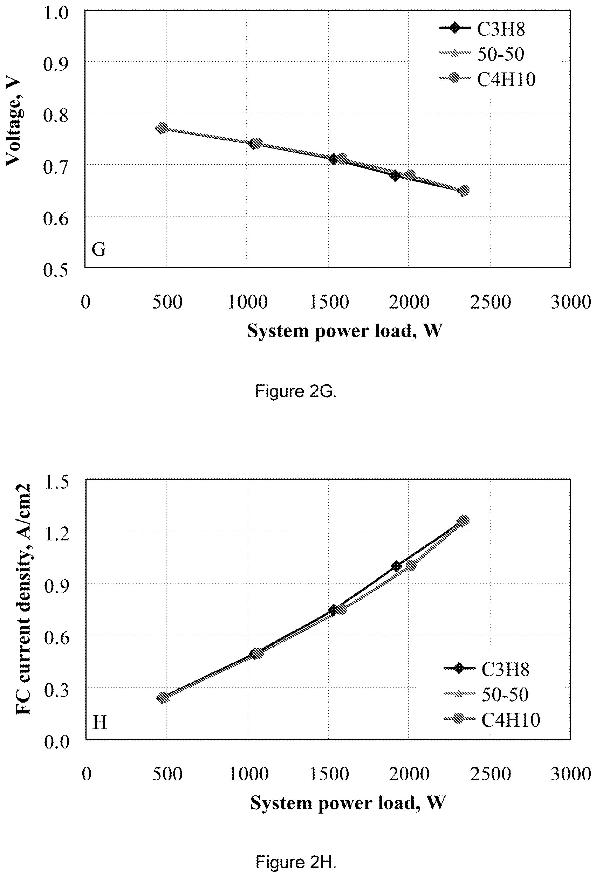

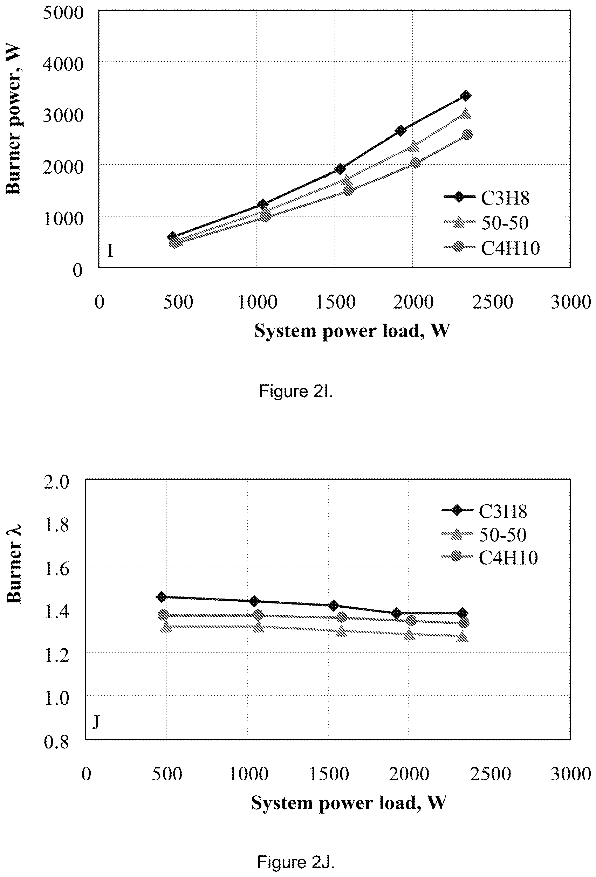

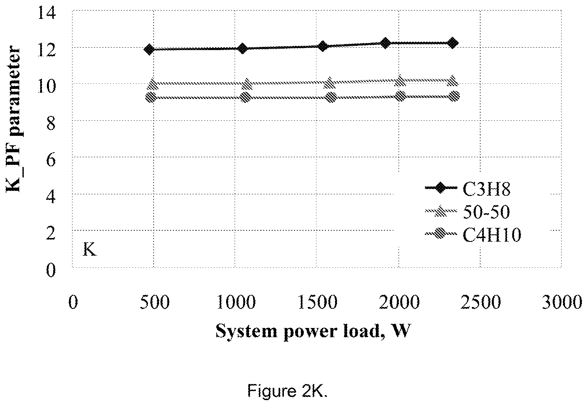

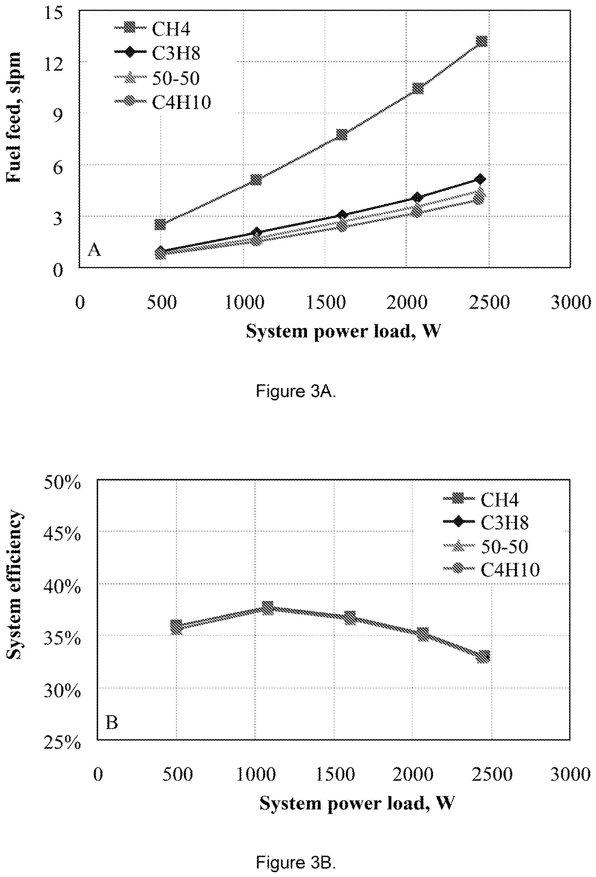

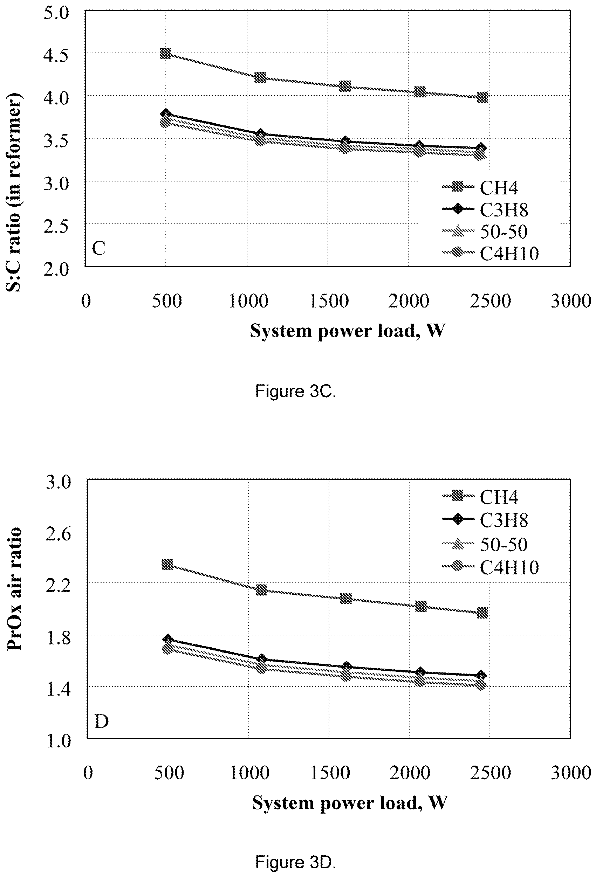

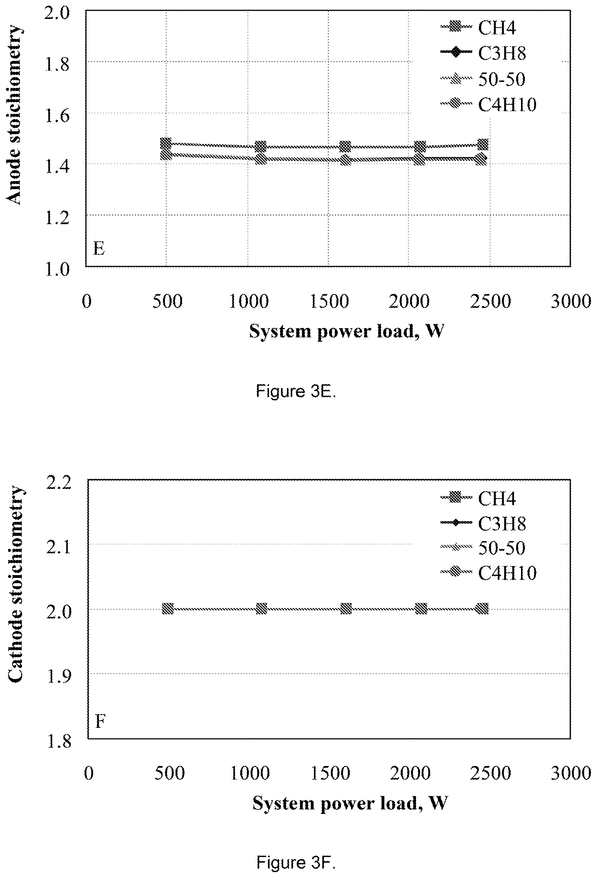

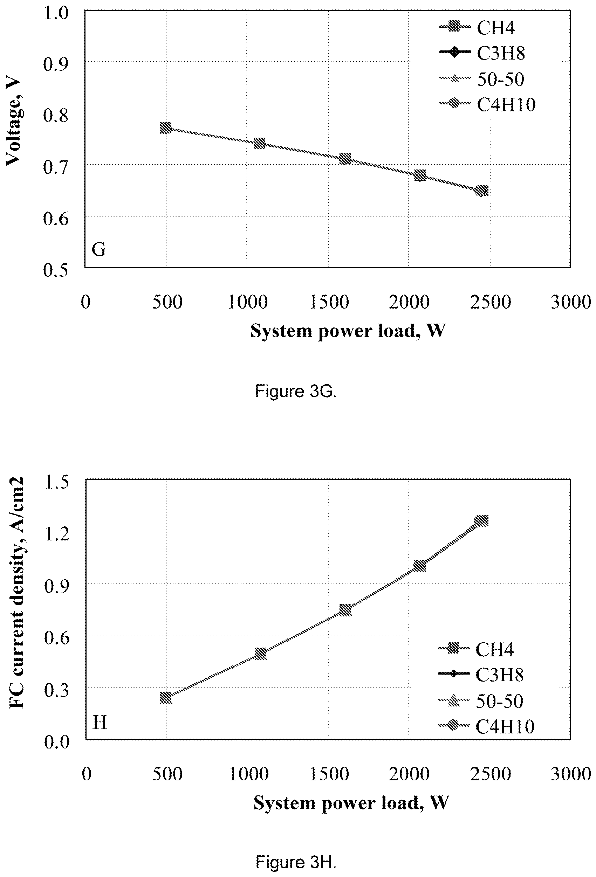

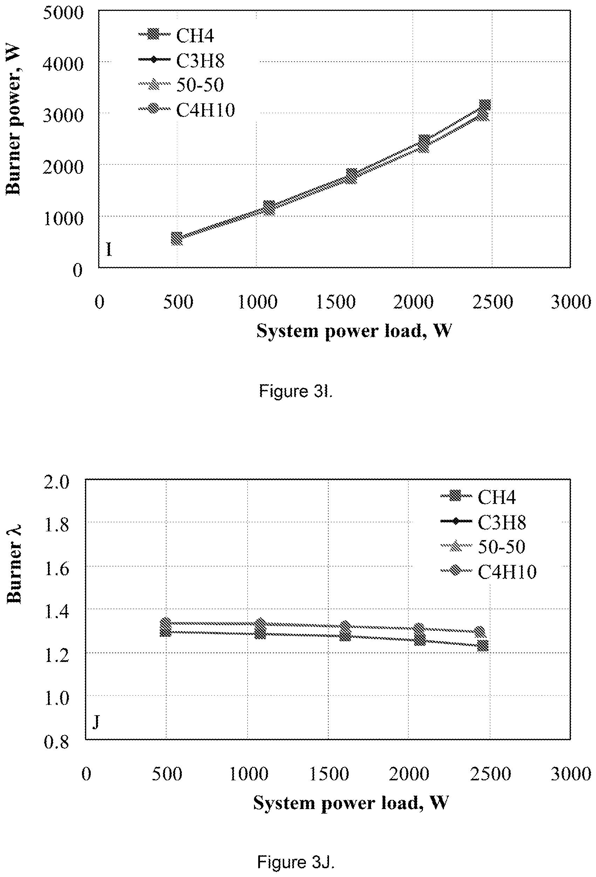

For both control strategies, the models were tested for three fuels: $C_3H_8$ (pure propane), $C_4H_{10}$ (pure n-butane), 50-50 (equimolar $C_3H_8$ / $C_4H_{10}$ mixture). The Current-and-Temperature-based control model was additionally run with pure methane ($CH_4$). For each fuel, the MCC was varied between 840 and 4400 Ampere-cells, which approximately corresponds to net system electrical power between 500 and 2500 $W_e$. The performance parameters of the system as a function of the net system electrical power for the two different control strategies are shown in Figures 2 and 3, respectively.

The results for the Fuel-based control strategy, as shown in Figures 2 A-K, indicate that the system operating parameters remain in the required range only for the equimolar 50-50 fuel, for which the control equations were set. Changes in the fuel composition caused dramatic swings in the operating parameters, bringing them well outside the values acceptable for fuel cell power system operation (see Table 1) for both pure propane and pure butane. With reference to Figure 2C and 2D, it is clear that for both butane and propane fuel, the S:C ratio in the fuel reformer and the $O_2$:CO ratio in the preferential oxidation device were outside the acceptable ranges. As mentioned in the foregoing, a low S:C ratio may result in coking the reforming catalyst, and low air flow rate in the preferential oxidation device may result in insufficient carbon monoxide removal to the desired concentration levels, while a high S:C ratio will lead to low efficiency and likely have a negative effect on the fuel reformer temperatures as excess process water will not properly vaporize, and a high air flow rate in the preferential oxidation device will result in excess hydrogen consumption, which will likely overheat the preferential oxidation device and lead to an overall low fuel cell power system efficiency. Therefore, the Fuel-based control strategy can operate only if the control parameters are adjusted as the fuel composition changes to correspond to a specific fuel mixture. However, this is undesirable for commercial use because of the variation in fuel specification for liquid propane gases in different countries and boiling off of propane and butane in different proportions in the tank during use (e.g., higher concentration of propane at the beginning of tank service and higher concentration of butane at the end of tank service).

For the Current-and-Temperature-based control strategy, while the hydrocarbon fuel flow rate significantly differs for different types of hydrocarbon fuels, as would be expected due to varying heating values, all other system parameters remain in a similar range for system operation independent of the fuel composition for any mix of butane and propane, as shown in Figures 3 A-J. The results indicate that all of the fuel cell power system operating parameters are within the desired ranges, as shown in Table 1. Therefore, the Current-and-Temperature-based control strategy, as described in the foregoing, is capable of handling a wide range of propane and butane-based fuel mixtures. One skilled in the art will appreciate that fine turning of the coefficients for the process water flow rate and preferential oxidation device air flow rate in equations (11) and (14), respectively, can be performed based on actual system testing to further adjust these values over the whole range of required system turn down.

The Current-and-Temperature-based control strategy was also modeled using pure methane ($CH_4$). Figures 3 A-J indicate that while the S:C ratio, preferential oxidation device air ratio, $\lambda_{AN}$, and $\lambda_{BR}$ remain in a narrow range for all LPG fuels, they have larger offset for methane due to significantly different H:C ratio for methane. Therefore, different correlation coefficients from the ones shown in equations (11) to (14) should be used for a natural gas system. However, with a modified set of coefficients, the system should be able to handle a range of variations in natural gas composition so that operation with unspecified natural gas fuels will be possible. Similarly, different sets of coefficients for the control system are likely to enable operation with other types of fuels, for example, mixed alcohols.

Comparing the two control strategies, one skilled in the art will appreciate that the Fuel-based control strategy requires a rigid set of correlations for the mass balance of the system. It would be expected, therefore, that the composition of the hydrocarbon fuel becomes an important component of the equations governing the fuel cell power system operation. In the situation where the hydrocarbon fuel composition is known throughout operation and the hydrocarbon fuel flow rate can be measured, the Fuel-based control strategy allows good control of the fuel cell power system. However, in situations where the fuel composition varies in different geographical locations and markets and/or during operation, the Current-and-Temperature-based control strategy provides simplified and improved control of the fuel cell power system.

While particular elements, embodiments, and applications of the present invention have been shown and described, it will be understood that the invention is not limited thereto since modifications may be made by those skilled in the art without departing from the scope of the present disclosure, particularly in light of the foregoing teachings.

**Claims**

1. A method of operating a fuel cell power system comprising at least one fuel cell stack connected to a fuel processing system, the fuel processing system comprising a vaporizer for vaporizing water or a mixture of hydrocarbon fuel and water, a fuel reformer for converting a hydrocarbon fuel into a hydrogen-rich reformate and a burner in thermal communication with the fuel reformer, the method comprising:

   supplying a mixture of hydrocarbon fuel and water to the vaporizer of the fuel processing system or supplying water to the vaporizer and mixing steam coming out of the vaporizer with gaseous fuels,
   supplying the mixture of hydrocarbon fuel and steam to the fuel reformer of the fuel processing system;
   supplying air to the burner of the fuel processing system;
   supplying the hydrogen-rich reformate from the fuel processing system to the at least one fuel cell stack;
   supplying an anode waste gas from the at least one fuel cell stack to the burner;
   drawing a load from the at least one fuel cell stack; and detecting an operating temperature of the fuel reformer; wherein

   supplying air and water to the fuel processing system comprises adjusting an amount of air and water to be supplied based on the load drawn from the at least one fuel cell stack; and
   supplying the hydrocarbon fuel to the fuel processing system comprises adjusting the amount of hydrocarbon fuel to be supplied based solely on the detected operating temperature of the fuel reformer.

2. The method of claim 1, wherein the hydrocarbon fuel is natural gas or liquefied petroleum gas.

3. The method of claim 1, further comprising determining a setpoint operating temperature of the fuel reformer and adjusting the amount of hydrocarbon fuel supplied to the fuel reformer if the detected operating temperature of the fuel reformer is different than the setpoint operating temperature of the fuel reformer.

4. The method of claim 3, wherein the setpoint operating temperature of the fuel reformer is between about 650 and about 750 degrees Celsius.

5. The method of claim 1, wherein supplying air and water to the fuel processing system further comprises adjusting the amount of air and water to be supplied based solely on the load drawn from the at least one fuel cell stack.

6. The method of claim 1, wherein the fuel processing system further comprises a water gas shift reactor downstream of the fuel reformer, and a carbon monoxide clean up device downstream of the water gas shift reactor.


**Patentansprüche**

1. Verfahren zum Betreiben eines Brennstoffzellensystems, das mindestens einen Brennstoffzellenstapel umfasst, der mit einem Treibstoffverarbeitungssystem verbunden ist, wobei das Treibstoffverarbeitungssystem einen Verdampfer zum Verdampfen von Wasser oder einer Mischung aus Kohlenwasserstofftreibstoff und Wasser, einen Treibstoffreformer zum Umwandeln eines Kohlenwasserstofftreibstoffs in ein Wasserstoff-reiches Reformat und einen mit dem Treibstoffreformer in thermischem Austausch stehenden Brenner umfasst, wobei das Verfahren umfasst:

   Liefern einer Mischung aus Kohlenwasserstofftreibstoff und Wasser an den Verdampfer des Treibstoffverarbeitungssystems oder Liefern von Wasser an den Verdampfer und Mischen von aus dem Verdampfer stammendem Dampf mit gasförmigen Treibstoffen,
   Liefern der Mischung aus Kohlenwasserstofftreibstoff und Dampf an den Treibstoffreformer des Treibstoffverarbeitungssystems;
   Liefern von Luft an den Brenner des Treibstoffverarbeitungssystems;
   Liefern des Wasserstoff-reichen Reformats aus dem Treibstoffverarbeitungssystem an den mindestens einen Brennstoffzellenstapel;
   Liefern eines Anodenabgases aus dem mindestens einen Brennstoffzellenstapel an den Brenner;
   Entnehmen eines Laststroms aus dem mindestens einen Brennstoffzellenstapel und Detektieren einer Betriebstemperatur des Treibstoffreformers; wobei
   das Liefern von Luft und Wasser an das Treibstoffverarbeitungssystem das Einstellen einer zuzuführenden Menge von Luft und Wasser basierend auf dem aus dem mindestens einen Brennstoffzellenstapel entnommenen Laststrom umfasst; und

das Liefern des Kohlenwasserstofftreibstoffs an das Treibstoffverarbeitungssystem das Einstellen der zuzuführenden Menge von Kohlenwasserstofftreibstoff basierend ausschließlich auf der detektierten Betriebstemperatur des Treibstoffreformers umfasst.

2. Verfahren nach Anspruch 1, wobei der Kohlenwasserstofftreibstoff Erdgas oder Flüssiggas ist.

3. Verfahren nach Anspruch 1, ferner umfassend ein Bestimmen einer Sollwert-Betriebstemperatur des Treibstoffreformers und Korrigieren der Menge an zugeführtem Kohlenwasserstofftreibstoff an den Treibstoffreformer, wenn die detektierte Betriebstemperatur des Treibstoffreformers von der Sollwert-Betriebstemperatur des Treibstoffreformers abweicht.

4. Verfahren nach Anspruch 3, wobei die Sollwert-Betriebstemperatur des Treibstoffreformers zwischen etwa 650 und etwa 750 Grad Celsius liegt.

5. Verfahren nach Anspruch 1, wobei das Liefern von Luft und Wasser an das Treibstoffverarbeitungssystem ferner ein Einstellen der zuzuführenden Menge an Luft und Wasser basierend ausschließlich auf dem aus dem mindestens einen Brennstoffzellenstapel entnommenen Laststrom umfasst.

6. Verfahren nach Anspruch 1, wobei das Treibstoffverarbeitungssystem ferner einen Wassergas-Shift Reaktor stromabwärts des Treibstoffreformers und eine Kohlenstoffmonoxid-Reinigungsvorrichtung stromabwärts des Wassergas-Shift Reaktors umfasst.

## Revendications

1. Procédé de fonctionnement d'un système électrique à piles à combustible comprenant au moins un module de piles à combustible connecté à un système de traitement de combustible, le système de traitement de combustible comprenant un vaporiseur pour vaporiser de l'eau ou un mélange de combustible hydrocarboné et d'eau, un reformeur de combustible pour convertir un combustible hydrocarboné en un reformat riche en hydrogène et un brûleur en communication thermique avec le reformeur de combustible, le procédé comprenant :

l'alimentation d'un mélange de combustible hydrocarboné et d'eau dans le vaporiseur du système de traitement de combustible ou l'alimentation d'eau dans le vaporiseur et le mélange d'une vapeur sortant du vaporiseur avec des combustibles gazeux,
l'alimentation du mélange de combustible hydrocarboné et de vapeur dans le reformeur de combustible du système de traitement de combustible ;
l'alimentation d'air dans le brûleur du système de traitement de combustible ;
l'alimentation du reformat riche en hydrogène du système de traitement de combustible jusqu'à l'au moins un module de piles à combustible ;
l'alimentation d'un déchet gazeux d'anode de l'au moins un module de piles à combustible jusqu'au brûleur ;
le tirage d'une charge de l'au moins un module de piles à combustible ; et la détection d'une température de fonctionnement du reformeur de combustible ; dans lequel
l'alimentation d'air et d'eau dans le système de traitement de combustible comprend l'ajustement d'une quantité d'air et d'eau devant être alimentée sur la base de la charge tirée de l'au moins un module de piles à combustible ; et
l'alimentation du combustible hydrocarboné dans le système de traitement de combustible comprend l'ajustement de la quantité de combustible hydrocarboné devant être alimentée sur la base uniquement de la température de fonctionnement détectée du reformeur de combustible.

2. Procédé selon la revendication 1, dans lequel le combustible hydrocarboné est un gaz naturel ou un gaz de pétrole liquéfié.

3. Procédé selon la revendication 1, comprenant en outre la détermination d'une température de fonctionnement de point de consigne du reformeur de combustible et l'ajustement de la quantité de combustible hydrocarboné alimentée dans le reformeur de combustible si la température de fonctionnement détectée du reformeur de combustible est différente de la température de fonctionnement de point de consigne du reformeur de combustible.

**4.** Procédé selon la revendication 3, dans lequel la température de fonctionnement de point de consigne du reformeur de combustible est entre environ 650 et environ 750 degrés Celsius.

**5.** Procédé selon la revendication 1, dans lequel l'alimentation d'air et d'eau dans le système de traitement de combustible comprend en outre l'ajustement de la quantité d'air et d'eau devant être alimentée sur la base uniquement de la de la charge tirée de l'au moins un module de piles à combustible.

**6.** Procédé selon la revendication 1, dans lequel le système de traitement de combustible comprend en outre un réacteur de conversion de gaz à l'eau en aval du reformeur de combustible, et un dispositif de purification de monoxyde de carbone en aval du réacteur de conversion de gaz à l'eau.

Figure 1.

Figure 2A.

Figure 2B.

Figure 2C.

Figure 2D.

Figure 2E.

Figure 2F.

Figure 2G.

Figure 2H.

Figure 2I.

Figure 2J.

Figure 2K.

Figure 3A.

Figure 3B.

Figure 3C.

Figure 3D.

Figure 3E.

Figure 3F.

Figure 3G.

Figure 3H.

Figure 3I.

Figure 3J.

**EP 2 847 816 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008293882 A